# EUROPEAN PATENT APPLICATION

(11) **EP 3 640 281 A1**
(43) Date of publication of application: **22.04.2020**
(21) Application number: 18201540.4
(22) Date of filing: 19.10.2018
(51) Int. Cl.: C08J 3/12, B29C 64/153

(54) **SPRAYABLE POWDER OF FLUOROPOLYMER PARTICLES**

(71) Applicant: 3M Innovative Properties Company, Saint Paul, MN 55133-3427 (US)
(72) Inventor: Geldmacher, Andreas, 41453 Neuss (DE); Zentis, Fee, D-84504 Burgkirchen (DE); Maerz, Michael, 41453 Neuss (DE)
(74) Representative: Bergen, Katja

(57) **Abstract**

The present disclosure relates to a powder comprising particles of a fluoropolymer, wherein the particles have an average particle size (dso) in a range from 20 to 100 micrometers, an average particle sphericity greater than 0.8 when measured according to the test method described in the experimental section, and wherein the powder has a bulk density no greater than 2000 g/l when measured according to DIN EN ISO 60:2000-1 and a powder flow time no greater than 20 seconds per 100 ml when measured according to DIN EN ISO 12086:2006-1.

According to another aspect, the present disclosure is directed to a process of manufacturing such powder and uses thereof. In still another aspect, it is provided a three-dimensional article obtained by sintering such powder.

## Description

### Technical Field

The present disclosure relates generally to the field of fluoropolymer particles, more specifically to the field of sprayable powder of fluoropolymer particles suitable for additive manufacturing, in particular by laser sintering. The present disclosure further relates to a process of manufacturing such powder of fluoropolymer particles and to three-dimensional articles obtained therefrom. The present disclosure is further directed to various uses of such powder of fluoropolymer particles.

### Background

Fluoropolymers have achieved outstanding commercial success due to their chemical and thermal inertness. They are used in a wide variety of applications in which severe operating conditions such as exposure to high temperatures and/or aggressive chemicals are encountered. Typical end use applications of the polymers include but are not limited to seals for engines, seals in oil-well drilling devices, and sealing elements for industrial equipment that operates at high temperatures or in a chemically aggressive environment.

In specific applications, the use of fluoropolymer particles in powder form is required. Fluoropolymer powders may be indeed advantageously employed for the coating of cookware articles and automotive parts. Among the various methods for producing powdered form of fluoropolymer, spray drying method has emerged as one advantageous method. Exemplary spray drying methods for producing fluoropolymer powder are described e.g. in US. Pat. No. 3,953,412 (Saito et al.) and in US. Pat. No. 6,518,349 (Felix et al.). While the described solutions may be satisfactory for producing fluoropolymer powders suitable for use in coating processes, they are not fully satisfactory for usage in other applications.

Without contesting the technical advantages associated with the solutions known in the art, there is still a need for a sprayable powder of fluoropolymer particles suitable for additive manufacturing, in particular by laser sintering.

### Summary

According to one aspect, the present disclosure relates to a powder comprising particles of a fluoropolymer, wherein the particles have an average particle size (dso) in a range from 20 to 100 micrometers, an average particle sphericity greater than 0.8 when measured according to the test method described in the experimental section, and wherein the powder has a bulk density no greater than 2000 g/l when measured according to DIN EN ISO 60:2000-1 and a powder flow time no greater than 20 seconds per 100 ml when measured according to DIN EN ISO 12086:2006-1.

According to another aspect, the present disclosure is directed to a process of manufacturing a powder comprising at least partially sintered particles of a fluoropolymer, wherein the process comprises the steps of:
a) providing a liquid dispersion comprising of primary particles of the fluoropolymer and a liquid phase;
b) spraying the liquid dispersion through an atomizing system to form droplets comprising the primary particles of the fluoropolymer;
c) vaporizing the liquid phase from the droplets at a temperature (T₁) lower than the melting temperature of the fluoropolymer, thereby forming a powder comprising substantially unsintered particles of the (at least one) fluoropolymer;
d) subjecting the powder comprising substantially unsintered particles of the fluoropolymer of step c) to a thermal treatment at a temperature (T₂) lower than the melting temperature of the fluoropolymer, wherein temperature (T₂) is greater than temperature (T₁), thereby forming a powder comprising at least partially sintered particles of the (at least one) fluoropolymer; and
e) optionally, subjecting the powder comprising at least partially sintered particles of the fluoropolymer of step d) to a further thermal treatment at a temperature (T₃) greater than the melting temperature of fluoropolymer.

In still another aspect, the present disclosure is directed to a three-dimensional article obtained by sintering a powder as described above.

According to yet another aspect, the present disclosure relates to the use of a powder as described above for laser sintering,

### Brief Description of the Drawings

**FIG. 1** is a scanning electron microscope image of a powder obtained by a process according to one aspect of the present disclosure.
**FIG. 2** is a scanning electron microscope image depicting the inner porous structure of a fluoropolymer particle obtained by a process according to one aspect of the present disclosure.

### Detailed description

According to a first aspect, the present disclosure relates to a powder comprising particles of a fluoropolymer, wherein the particles have an average particle size (dso) in a range from 20 to 100 micrometers, an average particle sphericity greater than 0.8 when measured according to the test method described in the experimental section, and wherein the powder has a bulk density no greater than 2000 g/l when measured according to DIN EN ISO 60:2000-1 and a powder flow time no greater than 20 seconds per 100 ml when measured according to DIN EN ISO 12086:2006-1.

In the context of the present disclosure, it has surprisingly been found that a fluoropolymer powder as described above, is outstandingly suitable for additive manufacturing, in particular by laser sintering.

Without wishing to be bound by theory, it is believed that this outstanding suitability for additive manufacturing is due in particular to the specific combination of technical characteristics as described above. The Applicant was faced with the challenge of formulating compositions specifically suitable for additive manufacturing, starting from a class of polymer which - according to the Applicant's knowledge - has never been reported for usage in this application.

It has further been discovered that the process as described above is particularly efficient for the manufacturing of fluoropolymer powders suitable for use in additive manufacturing.

Before any particular executions of this disclosure are explained in detail, it is to be understood that the disclosure is not limited in its application to the details of construction and the arrangement of components set forth in the following description. The invention is capable of other embodiments and of being practiced or of being carried out in various ways. Also, it is to be understood that the phraseology and terminology used herein is for the purpose of description. Contrary to the use of "consisting", the use of "including," "containing", "comprising," or "having" and variations thereof is meant to encompass the items listed thereafter and equivalents thereof as well as additional items. The use of "a" or "an" is meant to encompass "one or more". Any numerical range recited herein describing a physical property or a concentration is intended to include all values from the lower value to the upper value of that range and including the endpoints. For example, a concentration range of from 1 % to 50 % is intended to be an abbreviation and to expressly disclose the values between the 1 % and 50 %, such as, for example, 2 %, 40 %, 10 %, 30 %, 1.5 %, 3.9 % and so forth.

Unless indicated otherwise the total amounts of ingredients of a composition expressed as percentage by weight of that composition add up to 100 %, i.e. the total weight of the composition is always 100 % by weight unless stated otherwise.

The term "perfluorinated alkyl" or "perfluoro alkyl" is used herein to describe an alkyl group where all hydrogen atoms bonded to the alkyl chain have been replaced by fluorine atoms. For example, F₃C- represents a perfluoromethyl group.

A "perfluorinated ether" is an ether of which all hydrogen atoms have been replaced by fluorine atoms. An example of a perfluorinated ether is F₃C-O-CF₃.

In the context of the present disclosure, the expression "at least partially sintered particles" is meant to express that at least part of the fluoropolymer particles surface is (thermally) sintered. The expression "substantially unsintered particles" is meant to express that no more than 5% of the surface of each fluoropolymer particle is sintered.

According to an advantageous aspect of the present disclosure, the fluoropolymer particles for use herein are at least partially sintered.

In a beneficial aspect, at least 50%, at least 60%, at least 70%, at least 80%, at least 90%, at least 95%, or even at least 99% of the surface of each fluoropolymer particle is (thermally) sintered. In a particularly advantageous aspect of the disclosure, 100% of the surface of each fluoropolymer particle for use herein is (thermally) sintered. According to this particular aspect, the fluoropolymer particles for use herein are considered as (substantially) fully sintered.

In an exemplary aspect of the powder according to the disclosure, the particles for use herein have an average particle size in a range from 5 to 120 micrometers, from 10 to 120 micrometers, from 20 to 120 micrometers, from 20 to 110 micrometers, from 25 to 100 micrometers, from 25 to 90 micrometers, from 30 to 90 micrometers, or even from 30 to 80 micrometers.

According to an advantageous aspect, the particles for use in the present disclosure have an average particle size (dso) in a range from 20 to 95 micrometers, from 25 to 95 micrometers, from 25 to 90 micrometers, from 25 to 80 micrometers, from 25 to 70 micrometers, from 30 to 70 micrometers, from 30 to 65 micrometers, or even from 30 to 60 micrometers.

According to another advantageous aspect of the powder according to the disclosure, the particles for use herein have an average particle size (dio) in a range from 3 to 40 micrometers, from 5 to 40 micrometers, from 5 to 35 micrometers, from 10 to 35 micrometers, or even from 10 to 30 micrometers.

According to still another aspect of the powder, the particles for use herein have an average particle size (d₉₀) in a range from 60 to 120 micrometers, from 65 to 120 micrometers, from 65 to 110 micrometers, from 70 to 110 micrometers, from 75 to 110 micrometers, or even from 80 to 110 micrometers.

In yet another advantageous aspect of the present disclosure, the powder comprises no greater than 15 wt%, no greater than 12 wt%, no greater than 10 wt%, no greater than 8 wt%, no greater than 6 wt%, or even no greater than 5 wt% of fluoropolymer particles having an average particle size lower than 10 micrometers.

In a preferred aspect of the present disclosure, the particles for use herein have an average particle sphericity greater than 0.85, greater than 0.90, greater than 0.95, or even greater than 0.98, when measured according to the test method described in the experimental section.

In another preferred aspect, the powder according to the present disclosure has a bulk density no greater than 1800 g/l, no greater than 1600 g/l, no greater than 1400 g/l, no greater than 1200 g/l, no greater than 1000 g/l, or even no greater than 800 g/l, when measured according to DIN EN ISO 60:2000-1.

According to a typical aspect, the powder of the disclosure has a substantially monomodal size distribution of the fluoropolymer particles. In a typical aspect still, the particles referred to herein correspond substantially to secondary particles (i.e. resulting from the agglomeration and/or aggregation of primary fluoropolymer particles). In an alternative aspect, the particles referred to herein may correspond to a mixture of primary and secondary fluoropolymer particles.

According to another aspect, the powder of the disclosure comprises a bimodal size distribution of the fluoropolymer particles, whereby substantially two fluoropolymer particle sizes are combined to form the powder.

According to a further aspect, the powder of the disclosure may comprise a bimodal size distribution of the primary fluoropolymer particles. According to still a further aspect, the powder of the disclosure may comprise a bimodal size distribution of the secondary fluoropolymer particles.

In a preferred aspect, the powder of the present disclosure is characterized by a powder flow time no greater than 20 seconds per 100 ml, no greater than 18 seconds per 100 ml, no greater than 16 seconds per 100 ml, no greater than 15 seconds per 100 ml, no greater than 14 seconds per 100 ml, no greater than 12 seconds per 100 ml, no greater than 10 seconds per 100 ml, no greater than 8 seconds per 100 ml, no greater than 6 seconds per 100 ml, no greater than 5 seconds per 100 ml, or even no greater than 4 seconds per 100 ml, when measured according to DIN EN ISO 12086:2006-1.

The powder provided with the above-described technical feature is characterized as high-flowability powder, which is particularly beneficial for usage in additive manufacturing.

Any fluoropolymers conventionally known in the art may be used in the context of the present disclosure. Suitable fluoropolymers for use herein may be easily identified by those skilled in the art, in the light of the present disclosure.

Suitable fluoropolymers for use herein include, but are not limited to, elastomeric and thermoplastic fluoropolymers.

According to an advantageous aspect of the disclosure, the fluoropolymer(s) for use herein is selected from the group consisting of perfluorinated alkyl ethers (PFA); tetrafluoroethylene (TFE) polymers; homopolymer of tetrafluoroethylene (PTFE); (co)polymers derived from tetrafluoroethylene (TFE) and optional copolymerizable modifying monomers; fluorinated ethylene propylene (co)polymers (FEP); polyvinylidene fluoride (co)polymers (PVDF); ethylene tetrafluoroethylene (co)polymers (ETFE); ethylene cholorotrifluoroethylene (co)polymers (ECTFE); fluorinated (co)polymers of ethylene and propylene (HTE); fluorinated ethylene propylene vinylidene (co)polymers (THV); and any combinations or mixtures thereof.

In a particular aspect, the fluoropolymer(s) for use in the present disclosure is selected from the group of (co)polymers derived from tetrafluoroethylene (TFE) and optional copolymerizable modifying monomers. According to this particular aspect, the copolymerizable modifying monomers may be advantageously selected from the group consisting of perfluorinated alkyl vinyl ethers (PAVE's), perfluorinated alkyl allyl ethers (PAAE's), perfluorinated methyl vinyl ether (PMVE), perfluorinated ethyl vinyl ethers (PEVE), perfluorinated (n-propyl vinyl) ether (PPVE-1), perfluorinated 2-propoxypropylvinyl ether (PPVE-2), perfluorinated 3-methoxy-n-propylvinyl ether, perfluorinated 2-methoxy-ethylvinyl ether, perfluorinated methyl allyl ether (PMAE), perfluorinated ethyl allyl ether (PEAE), perfluorinated (n-propyl allyl) ether (PPAE-1), perfluorinated 2-propoxypropyl allyl ether (PPAE-2), perfluorinated 3-methoxy-n-propyl allyl ether, perfluorinated 2-methoxy-ethyl allyl ether, hexafluoropropylene (HFP), perfluorobutyl ethylene (PFBE), chlorotrifluoroethylene (CTFE), and any combinations or mixtures thereof.

According to a more advantageous aspect of the disclosure, the fluoropolymer(s) for use herein is selected from the group consisting of perfluorinated alkyl ethers (PFA); tetrafluoroethylene (TFE) polymers; homopolymer of tetrafluoroethylene (PTFE); (co)polymers derived from tetrafluoroethylene (TFE), and optionally copolymerizable modifying monomers.

According to one preferred aspect of the disclosure, the fluoropolymer(s) for use herein is selected from the group consisting of perfluorinated alkyl ethers (PFA).

According to another preferred aspect, the fluoropolymer(s) for use in the present disclosure has an average weight molecular weight greater than 100.000 g/mol, greater than 250.000 g/mol, greater than 500.000 g/mol, greater than 750.000 g/mol, or even greater than 1.000.000 g/mol, when measured according to the test method described in the experimental section.

According to a particular aspect, the powder of the present disclosure is obtained by a process comprising the steps of:
a) providing a liquid dispersion comprising primary particles of the fluoropolymer and a liquid phase;
b) spraying the liquid dispersion through an atomizing system to form droplets comprising the primary particles of the fluoropolymer;
c) vaporizing the liquid phase from the droplets at a temperature (T₁) lower than the melting temperature of the fluoropolymer, thereby forming a powder comprising substantially unsintered particles of the fluoropolymer;
d) subjecting the powder comprising substantially unsintered particles of the fluoropolymer of step c) to a thermal treatment at a temperature (T₂) lower than the melting temperature of the fluoropolymer, wherein temperature (T₂) is greater than temperature (T₁), thereby forming a powder comprising at least partially sintered particles of the fluoropolymer; and
e) optionally, subjecting the powder comprising at least partially sintered particles of the fluoropolymer of step d) to a further thermal treatment at a temperature (T₃) greater than the melting temperature of the fluoropolymer, thereby forming a powder comprising at least partially sintered particles of the fluoropolymer.

According to another aspect, the present disclosure is directed to a process of manufacturing a powder comprising at least partially sintered particles of a fluoropolymer, wherein the process comprises the steps of:
a) providing a liquid dispersion comprising primary particles of the fluoropolymer and a liquid phase;
b) spraying the liquid dispersion through an atomizing system to form droplets comprising the primary particles of the fluoropolymer;
c) vaporizing the liquid phase from the droplets at a temperature (T₁) lower than the melting temperature of the fluoropolymer, thereby forming a powder comprising substantially unsintered particles of the fluoropolymer;
d) subjecting the powder comprising substantially unsintered particles of the fluoropolymer of step c) to a thermal treatment at a temperature (T₂) lower than the melting temperature of the fluoropolymer, wherein temperature (T₂) is greater than temperature (T₁), thereby forming a powder comprising at least partially sintered particles of the fluoropolymer; and
e) optionally, subjecting the powder comprising at least partially sintered particles of the fluoropolymer of step d) to a further thermal treatment at a temperature (T₃) greater than the melting temperature of the fluoropolymer, thereby forming a powder comprising at least partially sintered particles of the fluoropolymer.

The method of manufacturing a powder comprising particles of a fluoropolymer according to the disclosure may be performed according to the general process steps relating to spray drying of polymeric dispersion, at the exception of the specificities (in particular, the various thermal treatments) as described above.

The general procedure for spray drying of polymeric dispersion, as described e.g. in US. Pat. No. 6,518,349 (Felix et al.), usually involves the steps of pumping an aqueous dispersion of a polymer feed into an atomizing system, generally located at the top of a drying chamber. The liquid is typically atomized into a stream of heated gas to evaporate the water contained in the multiplicity of droplets formed, thereby producing a dry powder.

In a typical aspect, the liquid dispersion for use herein comprises water, an organic solvent, or any combinations or mixtures. Advantageously, the organic solvent for use herein is water-miscible. Suitable organic solvents for use herein are advantageously selected from the group consisting of alcohol, ethers, and any combinations or mixtures thereof.

According to one particular aspect of the disclosure, the alcohol for use in the liquid dispersion comprises methanol, ethanol, n-propanol, isopropanol, n-butanol, and any mixtures thereof.

In a beneficial aspect of the process, the liquid phase for use in the liquid dispersion comprises a combination of water and alcohols, in particular water/methanol, water/ethanol, water/propanol or water/isopropanol. Advantageously, the liquid phase for use herein comprises an aqueous composition.

According to one beneficial aspect, the liquid phase for use herein comprises a surfactant, in particular partially- or perfluorinated surfactants, nonionic surfactants, and any combinations or mixtures thereof. Suitable surfactants may advantageously stabilize the liquid dispersion comprising of primary particles of the fluoropolymer.

According to the beneficial aspect according to which the liquid phase for use herein comprises fluorinated surfactants, the fluorinated surfactant is advantageously selected from the group consisting of perfluorinated carboxylic acids, polyfluoroethylene oxide carboxylic acids, fluorinated aliphatic carboxylic acids, other fluorinated emulsifiers, and any combinations, mixtures or salts thereof. In one particular aspect, the fluorinated surfactant for use herein is selected to comprise ammonium 4,8-dioxa-3H-perfluorononanoate. Suitable fluorinated surfactants for use herein are described e.g. in US. Pat. No. 7,838,608 (Hintzer et al.).

According to another beneficial aspect according to which the liquid phase for use herein comprises nonionic surfactants, the nonionic surfactants advantageously comprise (co)polymers of ethylene oxide.

In a typical aspect, the liquid dispersion for use herein has a solids content in a range from 10 to 70 wt%, from 15 to 70 wt%, from 15 to 65 wt%, from 20 to 65 wt%, from 25 to 65 wt%, from 25 to 60 wt%, from 30 to 60 wt%, from 35 to 60 wt%, or even from 40 to 60 wt%.

The process of manufacturing a powder according to the disclosure comprises the step of vaporizing the liquid phase from the droplets at a temperature (T₁) lower than the melting temperature of the fluoropolymer, thereby forming a powder comprising substantially unsintered particles of the fluoropolymer.

According to a typical aspect, the temperature (T₁) is lower than the melting temperature of the fluoropolymer by at least 5°C, at least 10°C, at least 20°C, at least 30°C, at least 40°C, at least 50°C, at least 60°C, at least 70°C, at least 80°C, at least 90°C, or even at least 100°C. The temperature (T₁) is suitably chosen such that a powder comprising substantially unsintered particles of the fluoropolymer is formed. The temperature (T₁) is advantageously chosen to be insufficient to cause sintering of the fluoropolymer particles that are formed.

According to another typical aspect, the temperature (T₁) is no greater than 300°C, no greater than 295°C, no greater than 290°C, no greater than 280°C, no greater than 270°C, no greater than 260°C, no greater than 250°C, no greater than 240°C, no greater than 230°C, no greater than 220°C, no greater than 210°C, or even no greater than 200°C.

According to still another typical aspect, the temperature (T₁) is in a range from 120 to 290°C, from 120 to 280°C, from 140 to 260°C, from 150 to 240°C, from 160 to 220°C, from 160 to 200°C, or even from 180 to 200°C.

The process of manufacturing a powder according to the disclosure further comprises the step of subjecting the powder comprising substantially unsintered particles to a thermal treatment at a temperature (T₂) lower than the melting temperature of the fluoropolymer, wherein temperature (T₂) is greater than temperature (T₁), thereby forming a powder comprising at least partially sintered particles of the fluoropolymer.

According to a typical aspect, the temperature (T₂) is lower than the melting temperature of the fluoropolymer by no greater than 30°C, no greater than 25°C, no greater than 20°C, no greater than 15°C, no greater than 10°C, or even no greater than 5°C.

According to another typical aspect, the temperature (T₂) is in a range from 265 to 300°C, from 270 to 300°C, from 270 to 295°C, from 275 to 295°C, from 280 to 295°C, or even from 285 to 295°C.

The process of manufacturing a powder according to the disclosure may optionally comprise the further step of subjecting the powder comprising at least partially sintered particles of the fluoropolymer to a further thermal treatment at a temperature (T₃) greater than the melting temperature of the fluoropolymer, thereby forming a (densified) powder comprising at least partially sintered particles of the fluoropolymer.

According to still another typical aspect, the temperature (T₃) is greater than 210°C, greater than 220°C, greater than 230°C, greater than 240°C, greater than 250°C, greater than 260°C, greater than 270°C, greater than 280°C, greater than 290°C, greater than 295°C, greater than 300°C, greater than 305°C, or even no greater than 310°C.

The various thermal treatments as described above may be performed by any methods conventionally known in the art of processing polymeric microparticles.

In one exemplary aspect, the various steps of subjecting the powder to a thermal treatment are performed by exposing the powder to a heated gas.

According to the present disclosure, the optional step of subjecting the powder comprising at least partially sintered particles of the fluoropolymer to a further thermal treatment at a temperature (T₃) greater than the melting temperature of the fluoropolymer, may advantageously correspond to a so-called densification step.

The process of manufacturing a powder according to the disclosure may optionally comprise the further step of treating the powder comprising at least partially sintered particles of the fluoropolymer resulting from step d) or e) with a liquid phase comprising water, an organic solvent, or any combinations or mixtures.

This optional step may advantageously help removing any unwanted additives, in particular surfactants, resulting from the liquid dispersion used for spray drying.

Accordingly, the liquid phase for use in this optional step is advantageously selected to be as described above.

In an advantageous aspect, the process according to the disclosure is free of any powder densification steps. More advantageously, the process according to the disclosure is free of any mechanical densification steps, in particular free of any mechanical compaction steps.

In another advantageous aspect, the process according to the disclosure is free of any thermal densification steps. More advantageously, the process according to the disclosure is free of any thermal densification steps of the powder performed at a temperature lower than the melting temperature of the fluoropolymer.

According to another aspect, the present disclosure is directed to a process of manufacturing a three-dimensional article, comprising the step of using a powder as described above.

In the context of the present disclosure, it has been indeed surprisingly found that a fluoropolymer powder as described above, is outstandingly suitable for additive manufacturing, in particular by laser sintering.

All the particular and advantageous aspects relating to the fluoropolymer powder as described above are fully applicable to the process of manufacturing a three-dimensional article.

In an advantageous aspect, the process of manufacturing a three-dimensional article further comprises the step of sintering a powder as described above, in particular by selective laser sintering.

Processes for manufacturing three-dimensional articles, and in particular by laser sintering of polymer powders are known in the art.

According to still another aspect of the present disclosure, it is provided a three-dimensional article obtained by sintering a powder as described above, in particular a three-dimensional article obtained by selective laser sintering of a powder as described above.

All the particular and advantageous aspects relating to the fluoropolymer powder as described above are fully applicable to the three-dimensional article obtained by sintering said powder.

According to yet another aspect, the present disclosure is directed to the use of a powder as described above for laser sintering, in particular for selective laser sintering.

According to still another aspect, the present disclosure relates to the use of a powder as described above for the manufacturing of a three-dimensional article. Advantageously, the manufacturing of the three-dimensional article comprises the step of sintering the powder, in particular by selective laser sintering.
Item 1 is a powder comprising particles of a (at least one) fluoropolymer, wherein the particles have an average particle size (dso) in a range from 20 to 100 micrometers, an average particle sphericity greater than 0.8 when measured according to the test method described in the experimental section, and wherein the powder has a bulk density no greater than 2000 g/l when measured according to DIN EN ISO 60:2000-1 and a powder flow time no greater than 20 seconds per 100 ml when measured according to DIN EN ISO 12086:2006-1.
Item 2 is a powder according to item 1, wherein the particles of a (at least one) fluoropolymer are at least partially sintered.
Item 3 is a powder according to item 2, wherein at least 50%, at least 60%, at least 70%, at least 80%, at least 90%, at least 95%, or even at least 99% of the surface of each fluoropolymer particle is (thermally) sintered.
Item 4 is a powder according to any of the preceding items, wherein the particles have an average particle size in a range from 5 to 120 micrometers, from 10 to 120 micrometers, from 20 to 120 micrometers, from 20 to 110 micrometers, from 25 to 100 micrometers, from 25 to 90 micrometers, from 30 to 90 micrometers, or even from 30 to 80 micrometers.
Item 5 is a powder according to any of the preceding items, wherein the particles have an average particle size (dso) in a range from 20 to 95 micrometers, from 25 to 95 micrometers, from 25 to 90 micrometers, from 25 to 80 micrometers, from 25 to 70 micrometers, from 30 to 70 micrometers, from 30 to 65 micrometers, or even from 30 to 60 micrometers.
Item 6 is a powder according to any of the preceding items, wherein the particles have an average particle size (dio) in a range from 3 to 40 micrometers, from 5 to 40 micrometers, from 5 to 35 micrometers, from 10 to 35 micrometers, or even from 10 to 30 micrometers.
Item 7 is a powder according to any of the preceding items, wherein the particles have an average particle size (d₉₀) in a range from 60 to 120 micrometers, from 65 to 120 micrometers, from 65 to 110 micrometers, from 70 to 110 micrometers, from 75 to 110 micrometers, or even from 80 to 110 micrometers.
Item 8 is a powder according to any of the preceding items, which comprises no greater than 15 wt%, no greater than 12 wt%, no greater than 10 wt%, no greater than 8 wt%, no greater than 6 wt%, or even no greater than 5 wt% of fluoropolymer particles having an average particle size lower than 10 micrometers.
Item 9 is a powder according to any of the preceding items, wherein the particles have an average particle sphericity greater than 0.85, greater than 0.90, greater than 0.95, or even greater than 0.98, when measured according to the test method described in the experimental section.
Item 10 is a powder according to any of the preceding items, which has a bulk density no greater than 1800 g/l, no greater than 1600 g/l, no greater than 1400 g/l, no greater than 1200 g/l, no greater than 1000 g/l, or even no greater than 800 g/l, when measured according to DIN EN ISO 60:2000-1.
Item 11 is a powder according to any of the preceding items, which comprises a bimodal size distribution of the particles of a (at least one) fluoropolymer.
Item 12 is a powder according to any of the preceding items, which comprises a bimodal size distribution of primary and/or secondary particles of a (at least one) fluoropolymer.
Item 13 is a powder according to any of the preceding items, which has a powder flow time no greater than 20 seconds per 100 ml, no greater than 18 seconds per 100 ml, no greater than 16 seconds per 100 ml, no greater than 15 seconds per 100 ml, no greater than 14 seconds per 100 ml, no greater than 12 seconds per 100 ml, no greater than 10 seconds per 100 ml, no greater than 8 seconds per 100 ml, no greater than 6 seconds per 100 ml, no greater than 5 seconds per 100 ml, or even no greater than 4 seconds per 100 ml, when measured according to DIN EN ISO 12086:2006-1.
Item 14 is a powder according to any of the preceding items, wherein the fluoropolymer is selected from the group consisting of perfluorinated alkyl ethers (PFA); tetrafluoroethylene (TFE) polymers; homopolymer of tetrafluoroethylene (PTFE); (co)polymers derived from tetrafluoroethylene (TFE) and optional copolymerizable modifying monomers; fluorinated ethylene propylene (co)polymers (FEP); polyvinylidene fluoride (co)polymers (PVDF); ethylene tetrafluoroethylene (co)polymers (ETFE); ethylene cholorotrifluoroethylene (co)polymers (ECTFE); fluorinated (co)polymers of ethylene and propylene (HTE); fluorinated ethylene propylene vinylidene (co)polymers (THV); and any combinations or mixtures thereof.
Item 15 is a powder according to item 14, wherein the copolymerizable modifying monomers are selected from the group consisting of perfluorinated alkyl vinyl ethers (PAVE's), perfluorinated alkyl allyl ethers (PAAE's), perfluorinated methyl vinyl ether (PMVE), perfluorinated ethyl vinyl ethers (PEVE), perfluorinated (n-propyl vinyl) ether (PPVE-1), perfluorinated 2-propoxypropylvinyl ether (PPVE-2), perfluorinated 3-methoxy-n-propylvinyl ether, perfluorinated 2-methoxy-ethylvinyl ether, perfluorinated methyl allyl ether (PMAE), perfluorinated ethyl allyl ether (PEAE), perfluorinated (n-propyl allyl) ether (PPAE-1), perfluorinated 2-propoxypropyl allyl ether (PPAE-2), perfluorinated 3-methoxy-n-propyl allyl ether, perfluorinated 2-methoxy-ethyl allyl ether, hexafluoropropylene (HFP), perfluorobutyl ethylene (PFBE), chlorotrifluoroethylene (CTFE), and any combinations or mixtures thereof.
Item 16 is a powder according to any of the preceding items, wherein the fluoropolymer is selected from the group consisting of perfluorinated alkyl ethers (PFA); tetrafluoroethylene (TFE) polymers; homopolymer of tetrafluoroethylene (PTFE); (co)polymers derived from tetrafluoroethylene (TFE), and optionally copolymerizable modifying monomers.
Item 17 is a powder according to any of the preceding items, wherein the fluoropolymer is selected from the group consisting of perfluorinated alkyl ethers (PFA).
Item 18 is a powder according to any of the preceding items, wherein the (at least one) fluoropolymer has an average weight molecular weight greater than 100.000 g/mol, greater than 250.000 g/mol, greater than 500.000 g/mol, greater than 750.000 g/mol, or even greater than 1.000.000 g/mol, when measured according to the test method described in the experimental section.
Item 19 is a powder according to any of the preceding items, which is obtained by a process comprising the steps of:
   a) providing a liquid dispersion comprising primary particles of the (at least one) fluoropolymer and a liquid phase;
   b) spraying the liquid dispersion through an atomizing system to form droplets comprising the primary particles of the (at least one) fluoropolymer;
   c) vaporizing the liquid phase from the droplets at a temperature (T₁) lower than the melting temperature of the (at least one) fluoropolymer, thereby forming a powder comprising substantially unsintered particles of the (at least one) fluoropolymer;
   d) subjecting the powder comprising substantially unsintered particles of the (at least one) fluoropolymer of step c) to a thermal treatment at a temperature (T₂) lower than the melting temperature of the (at least one) fluoropolymer, wherein temperature (T₂) is greater than temperature (T₁), thereby forming a powder comprising at least partially sintered particles of the (at least one) fluoropolymer; and
   e) optionally, subjecting the powder comprising at least partially sintered particles of the (at least one) fluoropolymer of step d) to a further thermal treatment at a temperature (T₃) greater than the melting temperature of the (at least one) fluoropolymer, thereby forming a (densified) powder comprising at least partially sintered particles of the (at least one) fluoropolymer.
Item 20 is a process of manufacturing a powder comprising at least partially sintered particles of a (at least one) fluoropolymer, wherein the process comprises the steps of:
   a) providing a liquid dispersion comprising primary particles of the (at least one) fluoropolymer and a liquid phase;
   b) spraying the liquid dispersion through an atomizing system to form droplets comprising the primary particles of the (at least one) fluoropolymer;
   c) vaporizing the liquid phase from the droplets at a temperature (T₁) lower than the melting temperature of the (at least one) fluoropolymer, thereby forming a powder comprising substantially unsintered particles of the (at least one) fluoropolymer;
   d) subjecting the powder comprising substantially unsintered particles of the (at least one) fluoropolymer of step c) to a thermal treatment at a temperature (T₂) lower than the melting temperature of the (at least one) fluoropolymer, wherein temperature (T₂) is greater than temperature (T₁), thereby forming a powder comprising at least partially sintered particles of the (at least one) fluoropolymer; and
   e) optionally, subjecting the powder comprising at least partially sintered particles of the (at least one) fluoropolymer of step d) to a further thermal treatment at a temperature (T₃) greater than the melting temperature of the (at least one) fluoropolymer, thereby forming a (densified) powder comprising at least partially sintered particles of the (at least one) fluoropolymer.
Item 21 is a process according to any of item 19 or 20, wherein the liquid phase comprises water, an organic solvent, or any combinations or mixtures.
Item 22 is a process according to item 21, wherein the organic solvent is selected from the group consisting of alcohol, ethers, and any combinations or mixtures thereof.
Item 23 is a process according to item 22, wherein the alcohol comprises methanol, ethanol, n-propanol, isopropanol, n-butanol, and any mixtures thereof.
Item 24 is a process according to any of items 19 to 23, wherein the liquid phase comprises a combination of water and alcohols, in particular water/methanol, water/ethanol, water/propanol or water/isopropanol.
Item 25 is a process according to any of items 19 to 24, wherein the liquid phase comprises an aqueous composition.
Item 26 is a process according to any of items 19 to 25, wherein the liquid phase comprises a surfactant, in particular partially- or perfluorinated surfactants, nonionic surfactants, and any combinations or mixtures thereof.
Item 27 is a process according to item 26, wherein the fluorinated surfactant is selected from the group consisting of perfluorinated carboxylic acids, polyfluoroethylene oxide carboxylic acids, fluorinated aliphatic carboxylic acids, other fluorinated emulsifiers, and any combinations, mixtures or salts thereof.
Item 28 is a process according to any of item 26 or 27, wherein the fluorinated surfactant is selected to comprise ammonium 4,8-dioxa-3H-perfluorononanoate.
Item 29 is a process according to item 26, wherein the nonionic surfactants comprise (co)polymers of ethylene oxide.
Item 30 is a process according to any of items 19 to 29, wherein the liquid dispersion has a solids content in a range from 10 to 70 wt%, from 15 to 70 wt%, from 15 to 65 wt%, from 20 to 65 wt%, from 25 to 65 wt%, from 25 to 60 wt%, from 30 to 60 wt%, from 35 to 60 wt%, or even from 40 to 60 wt%.
Item 31 is a process according to any of items 19 to 30, wherein the temperature (T₁) is lower than the melting temperature of the (at least one) fluoropolymer by at least 5°C, at least 10°C, at least 20°C, at least 30°C, at least 40°C, at least 50°C, at least 60°C, at least 70°C, at least 80°C, at least 90°C, or even at least 100°C.
Item 32 is a process according to any of items 19 to 31, wherein the temperature (T₁) is no greater than 300°C, no greater than 295°C, no greater than 290°C, no greater than 280°C, no greater than 270°C, no greater than 260°C, no greater than 250°C, no greater than 240°C, no greater than 230°C, no greater than 220°C, no greater than 210°C, or even no greater than 200°C.
Item 33 is a process according to any of items 19 to 32, wherein the temperature (T₁) is in a range from 120 to 290°C, from 120 to 280°C, from 140 to 260°C, from 150 to 240°C, from 160 to 220°C, from 160 to 200°C, or even from 180 to 200°C.
Item 34 is a process according to any of items 19 to 33, wherein the temperature (T₂) is lower than the melting temperature of the (at least one) fluoropolymer by no greater than 30°C, no greater than 25°C, no greater than 20°C, no greater than 15°C, no greater than 10°C, or even no greater than 5°C.
Item 35 is a process according to any of items 19 to 34, wherein the temperature (T₂) is in a range from 265 to 300°C, from 270 to 300°C, from 270 to 295°C, from 275 to 295°C, from 280 to 295°C, or even from 285 to 295°C.
Item 36 is a process according to any of items 19 to 35, wherein the temperature (T₃) is greater than 210°C, greater than 220°C, greater than 230°C, greater than 240°C, greater than 250°C, greater than 260°C, greater than 270°C, greater than 280°C, greater than 290°C, greater than 295°C, greater than 300°C, greater than 305°C, or even no greater than 310°C.
Item 37 is a process to any of items 19 to 36, wherein the further thermal treatment of optional step e) is performed by using a heated gas.
Item 38 is a process to any of items 19 to 37, wherein the optional step e) corresponds to a densification step.
Item 39 is a process according to any of items 19 to 38, which further comprises the step of treating the powder comprising at least partially sintered particles of the (at least one) fluoropolymer resulting from step d) or e) with a liquid phase comprising water, an organic solvent, or any combinations or mixtures.
Item 40 is a process according to item 39, wherein the liquid phase is as described in any of items 21 to 26.
Item 41 is a process according to any of items 19 to 40, which is free of any mechanical densification steps, in particular free of any mechanical compaction steps.
Item 42 is a process of manufacturing a three-dimensional article, comprising the step of using a powder according to any of items 1 to 19.
Item 43 is a process according to item 42, which further comprises the step of sintering a powder according to any of items 1 to 19, in particular by selective laser sintering.
Item 44 is a three-dimensional article obtained by sintering a powder according to any of items 1 to 19, in particular by selective laser sintering.
Item 45 is the use of a powder according to any of the items 1 to 19 for laser sintering, in particular for selective laser sintering.
Item 46 is the use of a powder according to any of the items 1 to 19 for the manufacturing of a three-dimensional article.
Item 47 is the use according to item 46, wherein the manufacturing of the three-dimensional article comprises the step of sintering the powder, in particular by selective laser sintering.

### EXAMPLES

The present disclosure is further illustrated by the following examples. These examples are merely for illustrative purposes only and are not meant to be limiting on the scope of the appended claims.

### Test Methods applied:

### Average particle size and particle size distribution:

The average particle size of the fluoropolymer particles and the size distribution of the powder comprising fluoropolymer particles are determined by laser diffraction method according to Test Method ISO 13320 using a Sympatec Helos measurement device (HELOS-R Series, available from Sympatec GmbH).

### Average particle sphericity

The average particle sphericity of the fluoropolymer particles is measured by Scanning Electron Microscopy (SEM) Imaging using techniques commonly known to those skilled in the art.

### Preparation of a powder comprising fluoropolymer particles by spray drying of fluoropolymer dispersions:

A PFA fluorothermoplastic aqueous dispersion PFA6900GZ (available from the 3M Company, USA) is fed into a spray dryer (Model Niro Mobil Minor 2000, available from Aaron Equipment Company, Denmark) and spray dried in a counter flow setup, using the below-mentioned parameters:
Inlet temperature: 190°C; Outlet temperature: 84°C; Fan power: 85%; Tp (pressure difference inlet-outlet): 32mmWS; p nozzle (air flow to nozzle): 35%; Pump: 20rpm. The drying air temperature far below the melting point of PFA (about 305°C) ensures that water from the aqueous dispersion is evaporated, but the obtained fluoropolymer particles are not sintered.

The obtained powder is thereafter exposed to a temperature of 295°C for 4 hours using heated gas in an oven. This additional thermal treatment (hardening step) allows slightly glazing the external surface of the fluoropolymer particles.

### Test Results:

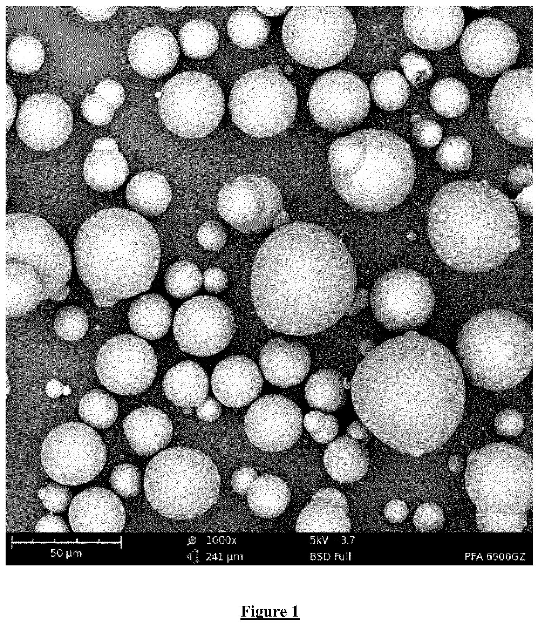

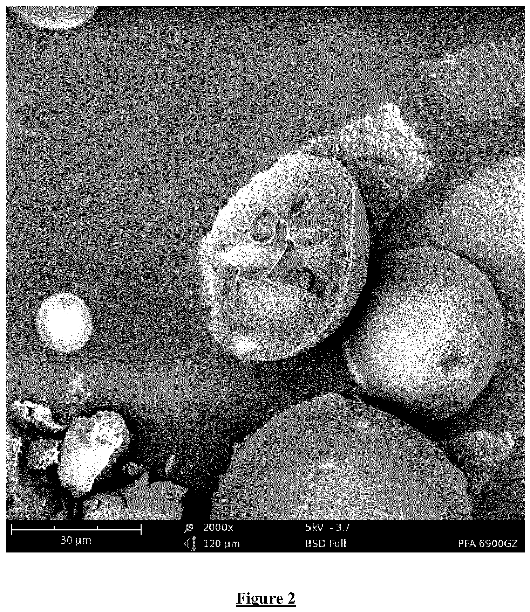

The resulting fluoropolymer particles have an average particle size (dso) of about 32 micrometers, an average particle size (d₉₀) of about 67 micrometers, and an average particle size (dio) of about 7 micrometers. The resulting fluoropolymer particles further have an average particle sphericity of 0.92. As can be seen from **Figure 1** (SEM images showing the powder obtained according to the process of the invention), the fluoropolymer particles have a highly spherical shape and a smooth surface. The fluoropolymer particles are further characterized by an inner porous structure, as shown in the SEM image referred to as **Figure 2****.**

The powder obtained according to the process of the invention has a bulk density of about 832 g/l, and a powder flow of about 9.5 seconds/100 ml. The suitability for laser sintering, in particular selective laser sintering, was confirmed in a powder bed test, where a thin powder layer is spread with a blade. The powder obtained according to the process of the invention gives a very smooth powder bed and spreads without agglomeration or cohesion.

## Claims

1. A powder comprising particles of a fluoropolymer, wherein the particles have an average particle size (dso) in a range from 20 to 100 micrometers, an average particle sphericity greater than 0.8 when measured according to the test method described in the experimental section, and wherein the powder has a bulk density no greater than 2000 g/l when measured according to DIN EN ISO 60:2000-1 and a powder flow time no greater than 20 seconds per 100 ml when measured according to DIN EN ISO 12086:2006-1.

2. A powder according to claim 1, wherein the particles of a fluoropolymer are at least partially sintered.

3. A powder according to any of claim 1 or 2, wherein the particles have an average particle size (dio) in a range from 3 to 40 micrometers, from 5 to 40 micrometers, from 5 to 35 micrometers, from 10 to 35 micrometers, or even from 10 to 30 micrometers.

4. A powder according to any of the preceding claims, wherein the particles have an average particle sphericity greater than 0.85, greater than 0.90, greater than 0.95, or even greater than 0.98, when measured according to the test method described in the experimental section.

5. A powder according to any of the preceding claims, which has a bulk density no greater than 1800 g/l, no greater than 1600 g/l, no greater than 1400 g/l, no greater than 1200 g/l, no greater than 1000 g/l, or even no greater than 800 g/l, when measured according to DIN EN ISO 60:2000-1.

6. A powder according to any of the preceding claims, which has a powder flow time no greater than 20 seconds per 100 ml, no greater than 18 seconds per 100 ml, no greater than 16 seconds per 100 ml, no greater than 15 seconds per 100 ml, no greater than 14 seconds per 100 ml, no greater than 12 seconds per 100 ml, no greater than 10 seconds per 100 ml, no greater than 8 seconds per 100 ml, no greater than 6 seconds per 100 ml, no greater than 5 seconds per 100 ml, or even no greater than 4 seconds per 100 ml, when measured according to DIN EN ISO 12086:2006-1.

7. A powder according to any of the preceding claims, wherein the fluoropolymer is selected from the group consisting of perfluorinated alkyl ethers (PFA); tetrafluoroethylene (TFE) polymers; homopolymer of tetrafluoroethylene (PTFE); (co)polymers derived from tetrafluoroethylene (TFE) and optional copolymerizable modifying monomers; fluorinated ethylene propylene (co)polymers (FEP); polyvinylidene fluoride (co)polymers (PVDF); ethylene tetrafluoroethylene (co)polymers (ETFE); ethylene cholorotrifluoroethylene (co)polymers (ECTFE); fluorinated (co)polymers of ethylene and propylene (HTE); fluorinated ethylene propylene vinylidene (co)polymers (THV); and any combinations or mixtures thereof.

8. A powder according to any of the preceding claims, which is obtained by a process comprising the steps of:
a) providing a liquid dispersion comprising primary particles of the fluoropolymer and a liquid phase;
b) spraying the liquid dispersion through an atomizing system to form droplets comprising the primary particles of the fluoropolymer;
c) vaporizing the liquid phase from the droplets at a temperature (T₁) lower than the melting temperature of the fluoropolymer, thereby forming a powder comprising substantially unsintered particles of the fluoropolymer;
d) subjecting the powder comprising substantially unsintered particles of the fluoropolymer of step c) to a thermal treatment at a temperature (T₂) lower than the melting temperature of the fluoropolymer, wherein temperature (T₂) is greater than temperature (T₁), thereby forming a powder comprising at least partially sintered particles of the fluoropolymer; and
e) optionally, subjecting the powder comprising at least partially sintered particles of the fluoropolymer of step d) to a further thermal treatment at a temperature (T₃) greater than the melting temperature of the fluoropolymer, thereby forming a densified powder comprising at least partially sintered particles of the fluoropolymer.

9. A process of manufacturing a powder comprising at least partially sintered particles of a fluoropolymer, wherein the process comprises the steps of:
a) providing a liquid dispersion comprising primary particles of the fluoropolymer and a liquid phase;
b) spraying the liquid dispersion through an atomizing system to form droplets comprising the primary particles of the fluoropolymer;
c) vaporizing the liquid phase from the droplets at a temperature (T₁) lower than the melting temperature of the fluoropolymer, thereby forming a powder comprising substantially unsintered particles of the fluoropolymer;
d) subjecting the powder comprising substantially unsintered particles of the fluoropolymer of step c) to a thermal treatment at a temperature (T₂) lower than the melting temperature of the fluoropolymer, wherein temperature (T₂) is greater than temperature (T₁), thereby forming a powder comprising at least partially sintered particles of the fluoropolymer; and
e) optionally, subjecting the powder comprising at least partially sintered particles of the fluoropolymer of step d) to a further thermal treatment at a temperature (T₃) greater than the melting temperature of the fluoropolymer, thereby forming a densified powder comprising at least partially sintered particles of the fluoropolymer.

10. A process according to claim 9, wherein the liquid phase comprises a surfactant, in particular partially- or perfluorinated surfactants, nonionic surfactants, and any combinations or mixtures thereof.

11. A process according to any of claims 9 or 10, wherein the temperature (T₁) is lower than the melting temperature of the fluoropolymer by at least 5°C, at least 10°C, at least 20°C, at least 30°C, at least 40°C, at least 50°C, at least 60°C, at least 70°C, at least 80°C, at least 90°C, or even at least 100°C.

12. A process according to any of claims 9 to 11, wherein the temperature (T₂) is lower than the melting temperature of the fluoropolymer by no greater than 30°C, no greater than 25°C, no greater than 20°C, no greater than 15°C, no greater than 10°C, or even no greater than 5°C.

13. A process according to any of claims 9 to 12, which further comprises the step of treating the powder comprising at least partially sintered particles of the fluoropolymer resulting from step d) or e) with a liquid phase comprising water, an organic solvent, or any combinations or mixtures.

14. A three-dimensional article obtained by sintering a powder according to any of claims 1 to 8, in particular by selective laser sintering.

15. Use of a powder according to any of the claims 1 to 8 for laser sintering, in particular for selective laser sintering.
